# EUROPÄISCHE PATENTSCHRIFT

(11) **EP 0 616 405 B1**
(45) Veröffentlichungstag und Bekanntmachung des Hinweises auf die Patenterteilung: **16.04.1997**
(21) Anmeldenummer: 94103466.2
(22) Anmeldetag: 08.03.1994
(51) Int. Cl.: H02G 15/18, H02G 1/14

(54) **Verfahren zum Umhüllen von Substraten**
Process for enclosing substrates
Procédé d'enveloppement de substrats

(30) Priorität: 18.03.1993 DE 4308593
(43) Veröffentlichungstag der Anmeldung: 21.09.1994
(73) Patentinhaber: kabelmetal electro GmbH, 30179 Hannover (DE)
(72) Erfinder: Grajewski, Franz, Dr.-Ing., D-31655 Stadthagen (DE); Matzat, Horst, D-30827 Garbsen (DE)

(56) Entgegenhaltungen:
- DE-A- 2 647 122
- DE-A- 2 712 077
- DE-B- 1 176 732
- US-A- 3 515 798
- US-A- 4 287 012

## Beschreibung

Die Erfindung betrifft ein Verfahren zum Umhüllen von Substraten nach dem Oberbegriff des Anspruchs 1.

Für die Umhüllung von Gegenständen sind sog. Kaltschrumpferzeugnisse bekanntgeworden, die überall dort bevorzugt eingesetzt werden, wo Wärme bzw. eine offene Flamme unerwünscht ist.

Kaltschrumpfartikel sind z.B. aus der US-PS 3,515,798 bekannt. Dort ist im Innern eines radial gedehnten Schlauches aus gummielastischem Werkstoff eine Drahtwendel angeordnet, die den Schlauch im aufgeweiteten Zustand hält. Durch Herausziehen der Drahtwendel schrumpft der Schlauch auf den zu umhüllenden Gegenstand.

Aus der DE-OS 26 47 122 ist ein Schlauch aus einem vernetzten elastomeren Isoliermaterial bekannt, der durch ein auf die äußere Oberfläche des Schlauches aufgebrachtes Spannmittel im aufgeweiteten Zustand gehalten wird. Das Spannmittel ist fest mit der Oberfläche des aufgeweiteten Schlauches verbunden, kann jedoch zum Zweck des Schrumpfens von der Oberfläche des Schlauches gelöst bzw. entfernt werden. Zu diesem Zweck kann die Verbindung zwischen dem Schlauch und dem Spannmittel aufgehoben werden, z.B. durch ein die Klebeverbindung aufhebendes Lösungsmittel, bzw. das Spannmittel von der Oberfläche entfernt werden, z.B. durch Zertrümmern oder durch wendelartiges Abschälen von Streifen. Für den letztgenannten Fall ist eine Schicht aus einem thermoplastischen Kunststoff auf den Schlauch in Form einer rohrartigen Hülle aufextrudiert, die für den Fall der Zertrümmerung aus einem harten Kunststoff besteht bzw. für den Fall des Abschälens in deren Oberfläche wendelartig verlaufende Sollbruchstellen eingearbeitet sind.

Die Verwendung von Spannmitteln aus hartem spröden Kunststoff schränkt die Anwendung stark ein, da der Gegenstand nicht biegbar ist. Darüberhinaus besteht die Gefahr, daß z.B. bei einer schlagartigen Beanspruchung die Spannmittel u.U. ungewollt zerstört werden, wodurch der Gegenstand unbrauchbar wird.

Das nachträgliche Einarbeiten der Sollbruchstellen ist ein zusätzlicher Arbeitsgang der den Gegenstand verteuert. In beiden Fällen muß der Gegenstand, nachdem er in die für die Schrumpfung vorgesehene Position gebracht wurde, noch einmal bearbeitet werden, wozu in jedem der Fälle beide Hände des Monteurs erforderlich sind.

Das Arbeiten mit Lösungsmitteln an der Montagestelle scheidet vielfach wegen umweltbedingter Bedenken aus.

Der Erfindung liegt die Aufgabe zugrunde, ein Verfahren zum Umhüllen eines Gegenstands anzugeben, bei welchem die Bindung zwischen dem aufgeweiteten Rohr und dem Spannmittel nicht durch ungewollte schlagartige Beanspruchung aufgehoben wird, welches kostengünstig und ohne größeren Aufwand durchführbar ist.

Diese Aufgabe wird durch die im Kennzeichen des Anspruchs 1 erfaßten Merkmale gelöst.

Der wesentliche Vorteil der Erfindung ist darin zu sehen, daß durch die Abkühlung des Kunststoffrohres dieses so versprödet bzw. so mit inneren Spannungen beaufschlagt wird, daß dieses von selbst zerspringt bzw. durch eine sehr geringe mechanische Beanspruchung wie Klopfen mit einem Schraubendreher bzw. Zusammendrücken mit einer Zange zerstört wird. Wesentlich ist hierbei, daß ein bei den üblichen Umgebungstemperaturen (0 - 30 ° C) verformbarer nicht spröder Kunststoff für das Kunststoffrohr verwendet werden kann, so daß eine unerwünschte Zerstörung des Kunststoffrohres beim Transport und auch bei der Handhabung nicht auftreten können.

Weitere Vorteile der Erfindung sind in den Unteransprüchen erfaßt.

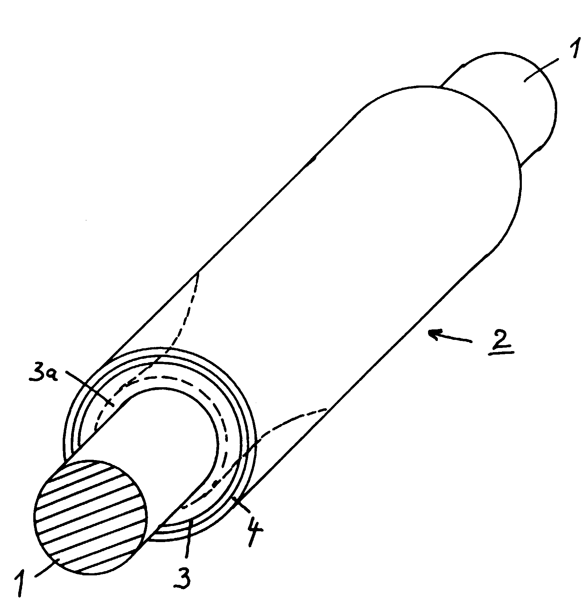

Die Erfindung ist anhand des in der Figur schematisch dargestellten Ausführungsbeispiels näher erläutert.

Mit 1 ist ein elektrisches Kabel bezeichnet, welches eine nicht dargestellte Verbindungsstelle aufweist, welche nachisoliert und/oder geschützt werden soll. Hierzu wird vor Herstellung der Verbindungsstelle auf eines der Kabel 1 ein rohrförmiger Gegenstand 2 geschoben, dessen Innendurchmesser größer ist als der größte Außendurchmesser des Kabels 1 bzw. der Verbindungsstelle.

Der Gegenstand 2 besteht aus einem Schlauch 3 aus einem gummielastischen Werkstoff, wie z.B. Neopren. Die äußere Oberfläche des Schlauches 3 ist fest mit einem Kunststoffrohr 4 verbunden, welches den radial gedehnten Schlauch 3 im gedehnten Zustand hält. Als Material für das Kunststoffrohr 4 kommen nahezu alle thermoplastisch verarbeitbaren Kunststoffe in Betracht.

Nachdem der Gegenstand 2 über der Verbindungsstelle angeordnet ist, wird der Gegenstand 2 mit einem Kältespray, z.B. aus einer Druckflasche mit Flüssiggas, z.B. flüssiger Luft oder flüssigem Kohlendioxid besprüht. Bei einigen Werkstoffen führt die Abkühlung zu so starken inneren Spannungen, daß das Kunststoffrohr 4 von selbst zerspringt. Auf jeden Fall reicht ein leichter Schlag mit einem Werkzeug, um das abgekühlte Kunststoffrohr 4 zum Zerspringen zu bringen.

Wesentlich ist, daß bei der Abkühlung eine zu starke Abkühlung vermieden wird, damit nicht auch der Schlauch 3 zerspringt.

Die gestrichelte Linie zeigt, daß bereits ein Teil des Schlauches 3 auf das Kabel 1 heruntergeschrumpft ist (s. 3a). Die Herstellung des Gegenstandes 2 erfolgt dadurch, daß auf einen nahezu endlosen Schlauch 3 das Kunststoffrohr 4, z.B. aus Polyvinylchlorid oder Polyethylen aufextrudiert wird. Unter Umständen ist es erforderlich, vor der Extrusion auf den Schlauch 3 einen geeigneten Kleber aufzubringen.

Nach der Extrusion werden von dem hergestellten Doppelrohr die Gegenstände 2 in der benötigten Länge abgetrennt, die Gegenstände über den Erweichungspunkt des Kunststoffrohres 4 erwärmt und um ca. 100 % in radialer Richtung gedehnt. Hierzu dient beispielsweise ein nicht dargestellter Dorn, auf den der Gegenstand 2 aufgeschoben wird. Der Gegenstand 2 wird dann im gedehnten Zustand abgekühlt. Nach Entfernung des Dornes wird der Schlauch 3 im gedehnten Zustand durch das Kunststoffrohr 4 gehalten und kann seiner Verwendung im Sinne der Erfindung zugeführt werden.

## Patentansprüche

1. Verfahren zum Umhüllen von Substraten (1), insbesondere zum Umhüllen von Kabelspleißen oder Kabelenden, bei dem um das Substrat (1) ein in radialer Richtung aufgeweitetes Rohr (3) aus einem gummielastischen Werkstoff, welches durch ein mit der äußeren Oberfläche des Rohres (3) verbundenes Spannmittel in Form eines Rohres (4) aus zerspringborem Kunststoff im aufgeweiteten Zustand gehalten wird, angeordnet wird und bei welchem zum Zweck der Rückstellung des Rohres die Verbindung zwischen der Oberfläche des Rohres und dem Spannmittel aufgehoben wird, dadurch gekennzeichnet, daß zur Zerstörung des Kunststoffrohrs dieses auf eine Temperatur unterhalb der Umgebungstemperatur abgekühlt wird.

2. Verfahren nach Anspruch 1, dadurch gekennzeichnet, daß das Kunststoffrohr (4) mit einem gekühlten Medium behandelt wird.

3. Verfahren nach Anspruch 2, dadurch gekennzeichnet, daß das Kunststoffrohr (4) mit einem gekühlten Medium angeblasen bzw. angestrahlt wird.

4. Verfahren nach einem der Ansprüche 1 bis 3, dadurch gekennzeichnet, daß das Kunststoffrohr (4) mit Flüssiggas oder Trockeneis bestrahlt wird.

5. Verfahren nach einem der Ansprüche 1 bis 4, dadurch gekennzeichnet, daß die Kühlbehandlung so lange fortgesetzt wird, bis das Kunststoffrohr (4) aufgrund innerer Spannungen zerstört wird.

6. Verfahren nach einem der Ansprüche 1 bis 4, dadurch gekennzeichnet, daß das Kunststoffrohr (4) nach der Kühlbehandlung einer mechanischen Belastung ausgesetzt wird.

7. Verfahren nach einem der Ansprüche 1 bis 6, dadurch gekennzeichnet, daß das Kunststoffrohr (4) mit einem Kältespray behandelt wird.

8. Verfahren nach einem der Ansprüche 1 bis 7, dadurch gekennzeichnet, daß die Verbindung zwischen dem Rohr (3) und dem Kunststoffrohr (4) dadurch aufgehoben wird, daß ein zwischen Rohr (3) und Kunststoffrohr (4) befindlicher Klebstoff durch Versprödung und/oder radiales Schrumpfen des Kunststoffrohres (4) aufgrund der Abkühlung zerstört wird.

## Claims

1. Process for sheathing substrates (1), in particular for sheathing cable splices or cable ends, in which a tube (3) of elastomeric material which is expanded in the radial direction and is maintained in the expanded state by a bracing means, which is in the form of a tube (4) made of plastic that can be made to break up and is connected to the outer surface of the tube (3), is arranged around the substrate (1), and in which, for the purpose of recovery of the tube, the connection between the surface of the tube and the bracing means is eliminated, characterized in that, for the purpose of destroying the plastic tube, the latter is cooled to a temperature below ambient temperature.

2. Process according to Claim 1, characterized in that the plastic tube (4) is treated with a cooled medium.

3. Process according to Claim 2, characterized in that a cooled medium is blown or sprayed against the plastic tube (4).

4. Process according to one of Claims 1 to 3, characterized in that the plastic tube (4) is sprayed with liquified gas or dry ice.

5. Process according to one of Claims 1 to 4, characterized in that the cooling treatment is continued until the plastic tube (4) is destroyed owing to internal stresses.

6. Process according to one of Claims 1 to 4, characterized in that the plastic tube (4) is exposed to a mechanical load after the cooling treatment.

7. Process according to one of Claims 1 to 6, characterized in that the plastic tube (4) is treated with a cold spray.

8. Process according to one of Claims 1 to 7, characterized in that the connection between the tube (3) and the plastic tube (4) is eliminated by an adhesive situated between tube (3) and plastic tube (4) being destroyed as a result of embrittlement and/or radial shrinkage of the plastic tube (4) owing to the cooling.

## Revendications

1. Procédé pour l'enveloppement de substrats (1), en particulier pour l'enveloppement d'épissures de câbles ou d'extrémités de câbles, dans lequel est disposé autour du substrat (1) un tube (3) élargi suivant la direction radiale, composé d'un matériau élastique, et qui est maintenu à l'état élargi par un moyen tendeur (4) en plastique pouvant être rompu, relié à la surface extérieure du tube (3), et dans lequel la liaison entre la surface du tube et le moyen tendeur peut être supprimée pour ramener le tube à son état initial, caractérisé en ce que, pour détruire le tube en plastique, celui-ci est refroidit à une température inférieure à la température environnante.

2. Procédé suivant la revendication 1, caractérisé en ce que le tube en plastique (4) est traité avec un agent refroidi.

3. Procédé suivant la revendication 2, caractérisé en ce qu'un agent refroidi est soufflé ou projeté sur le tube en plastique (4).

4. Procédé suivant l'une des revendications 1 à 3, caractérisé en ce que du gaz liquide ou de la neige carbonique est projeté(e) sur le tube en plastique (4).

5. Procédé suivant l'une des revendications 1 à 4, caractérisé en ce que le traitement réfrigérant est poursuivi jusqu'à ce que le tube en plastique (4) soit détruit du fait de ses tensions internes.

6. Procédé suivant l'une des revendications 1 à 4, caractérisé en ce qu'après le traitement réfrigérant, le tube en plastique (4) est soumis à une contrainte mécanique.

7. Procédé suivant l'une des revendications 1 à 6, caractérisé en ce que le tube en plastique (4) est traité avec un spray réfrigérant.

8. Procédé suivant l'une des revendications 1 à 7, caractérisé en ce que la liaison entre le tube (3) et le tube en plastique (4) est supprimée par le fait qu'une colle se trouvant entre le tube (3) et le tube en plastique (4) est détruite par fragilisation et/ou retrait radial du tube en plastique (4) du fait du refroidissement.
